Europäisches Patentamt

European Patent Office

Office européen des brevets

(11) Publication number: **0 273 539**
**A2**

## EUROPEAN PATENT APPLICATION

(21) Application number: **87302036.6**

(22) Date of filing: **10.03.87**

(51) Int. Cl.⁴: **G05B 19/04**

(30) Priority: **10.12.86 GB 8629522**

(43) Date of publication of application:
**06.07.88 Bulletin 88/27**

(84) Designated Contracting States:
**AT BE CH DE ES FR GB GR IT LI LU NL SE**

(71) Applicant: **AB Electronic Components Limited**
**Abercynon**
**Mountain Ash Mid-Glamorgan CF45 4SF**
**Wales(GB)**

(72) Inventor: **Moon, Anthony George**
**22, Greenacres South Cornelly Bridgend**
**Mid Glamorgan Wales CF33 4SE(GB)**

(74) Representative: **Holliday, Frank**
**Marks & Clerk Friars House 6-10 Parkway**
**Chelmsford, Essex CM2 0NF(GB)**

(54) **Logic controller.**

(57) A logic controller 1 comprises random access storage means 2 for storing single binary bits of information, programmable read only storage means 22, an instruction decoder 23 and a timer circuit 17 for measuring a duration of time. The arrangement is such that binary bits of information 5,16 corresponding to a current "condition" of a number of accessories and to a number of timer "channels", are supplied in a cycle to the random access storage means 2. The bits 5,16 are then examined by the instruction decoder 23, in relation to a read only storage means program 21, to provide output bits of information 8 to control the accessories.

FIG.1.

# LOGIC CONTROLLER

This invention relates to logic controllers.

Microprocessors are now being used in relation to control systems for vehicles, security systems and domestic appliances, which traditionally used electromechanical devices. Microprocessors however, have an architecture that is inefficient for use in such control systems, because their binary word-orientated structure is more suited to applications involving numeric operations. It is therefore not effective to use microprocessore in many applications where only simple processing of data is required.

Microprocessors are also suseptible to crashing due for example to overwriting a stack, because program and data information are stored in the same memory space.

Although systems can be produced using traditional electronics to control various accessories, they lack the flexibility of control systems that may be programmed.

According to the present invention there is provided a logic controller comprising, random access storage means for storing single binary bits of information, programmable read only storage means, an instruction decoder and a timer circuit for measuring a duration of time, the arrangement being such that binary bits of information corresponding to a current "condition" of a number of accessories and to a number of timer "channels", are supplied in a cycle to the random access storage means, the bits being examined by the instruction decoder, in relation to a read only storage means program, to provide output bits of information to control the accessories.

Preferably a shift register is used to write single bits of information to the random access storage means and a shift register is also preferably used to read single bits of information from the random access storage means.

Preferably a counter is used to clock the single bits of information into and out of the random access storage means.

The timer circuit preferably comprises, a counter, an adder, random access storage means and digital comparison means, the arrangement being such that in one cycle of the counter a duration of time in the form of a binary word is added to the present binary state of the counter, using the adder. The result of the addition is then stored in the random access storage means. In the next cycle the result in the random access storage means is compared with the next binary state of the counter, using the digital comparison means. The process is repeated, every cycle, until the result of the addition is found to be equal to the binary state of the counter in which case the duration of time is measured.

An embodiment of the invention will now be described, by way of example, with reference to the accompanying drawings in which:-

Figure 1 shows a schematic representation of a circuit used in one embodiment of logic controller.

Figure 2 shows a more detailed schematic representation of a timer circuit used in the circuit of Figure 1.

Figure 3 shows a program that is stored in the read only storage means of the embodiment of logic controller of Figure 1.

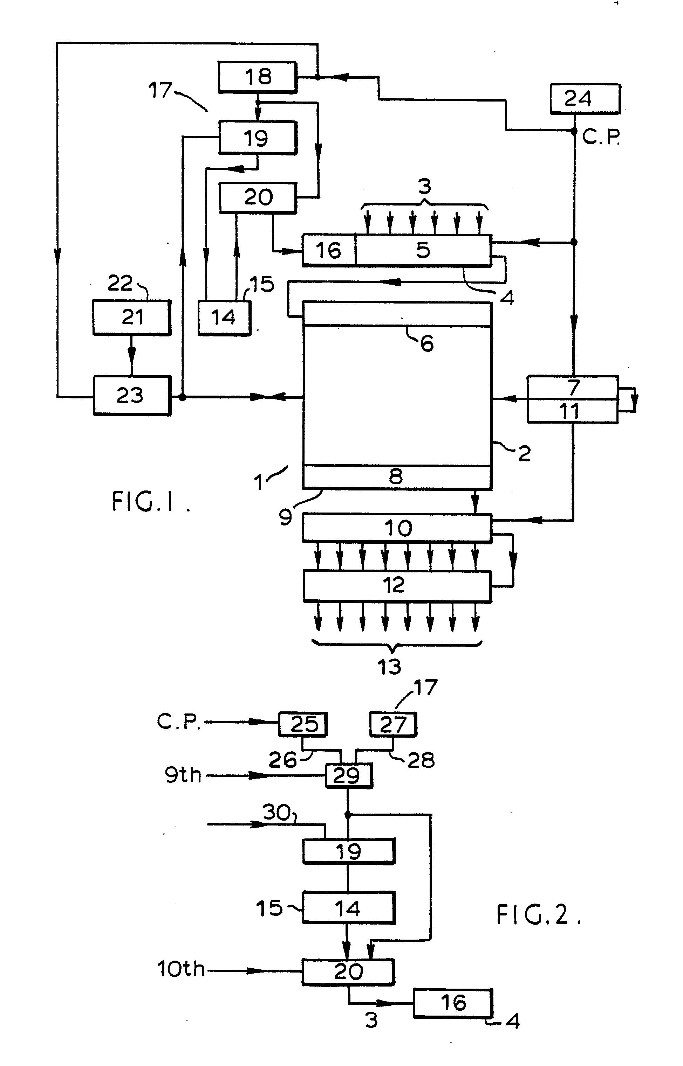

Referring to Figure 1, random access storage means are provided at the core of the controller 1 by a 256 $^\times$ 1 bit RAM 2. Input signals 3 to the controller 1 come from various accessories (not shown) such as switches and sensors. The inputs 3 are clocked into an input shift register 4 in the form of single input bits 5 of information and the shift register 4 is connected so that the input bits 5 are then clocked into the top 6 of the RAM 2, by an incremented counter 7.

Single outputs bits 8 of information are generated by the controller and are stored at the bottom 9 of the RAM 2. The output bits 8 are clocked into an output shift register 10 by a decremented counter 11. The output bits 8 are then clocked into a latch 12 which sends output signals 13 to drive accessories (not shown) such as relays and transistor switches.

Timer information 14 related to an input device is stored in a second RAM 15 as a ten bit word. The ten bit word represents a timer channel. The first eight bits represent a time and the 9th and 10th bits are control bits. Single timer bits 16 of information are generated by a timer circuit 17 comprising essentially a counter 18, an adder 19, and digital comparison means or a comparator 20 for comparing 8 bit words for equality. The comparator 20 generates the timer bits 16 which are clocked into the input shift register 4, and then clocked into the top 6 of the RAM 2, together with the input bits 5.

Programmed instructions 21 for controlling the controller 1 are stored in programmable read only storage means or in a ROM 22. The instructions 21 are fed into an instruction decoder 23. The instruction decoder 23 is connected so that bits can be read from or written to the RAM 2. The controller 1 is synchronised using a clock pulse generator 24.

Referring to Figure 2, the timer circuit 17 of Figure 1 is shown in more detail. An eight bit counter 25 generates an eight bit timer word 26 every 40mS. The output of the counter 25 is divided using a divider 27 to generate a further eight bit timer word 28 every 4 seconds. The 9th control bit of the timer information 14 is used to select the output from either the counter 25 or the divider 27 using a multiplexer 29. The eight bit timer word from the multiplexer 29 is fed into an adder 19 and is added to another eight bit word representing a duration of time 30. The output of the adder 19 gives the first eight bits for the timer information 14 which is stored in the second RAM 15. Up to sixteen timer channels in the form of ten bit words may be stored as timer information. The first eight bits of the timer information 14 are compared with the current eight bit timer word 26 using the comparater 20. The comparater 20 is enabled or inhibited depending upon the state of the 10th control bit of the timer information 14. The comparator 20 gives an output 31 if the two inputs are equal and the output 31 sets the appropriate timer bit 16 of the input shift register 4 for that timer channel. This is subsequently clocked into the RAM 2.

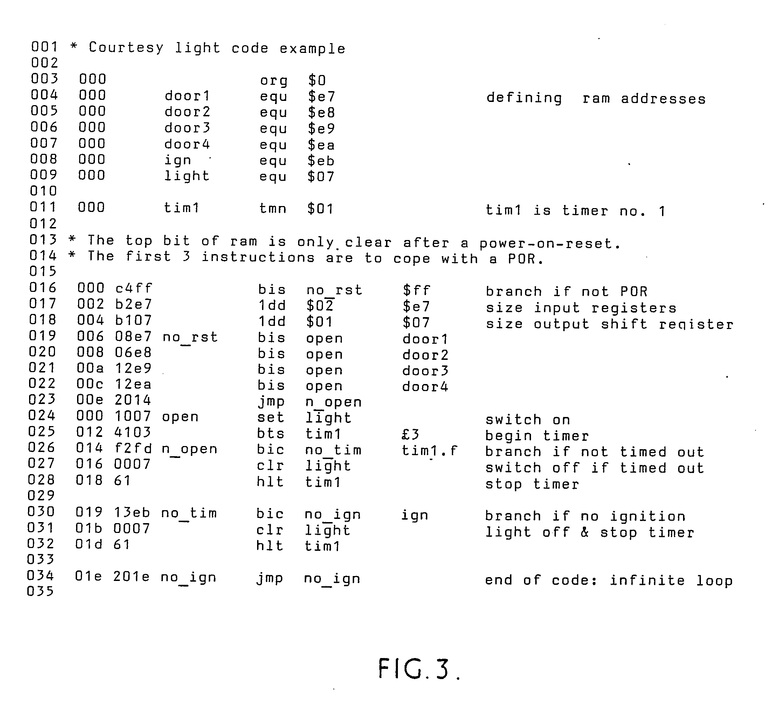

Referring to Figure 3 a program is shown which defines the instructions 21 for controlling the controller 1. Each line number represents an instruction 21.

The operation of the logic controller 1 is now described, in which the controller controls accesories in a car. The input signals 3 are provided by sensors to four doors on the car and by a sensor to the car's ignition. An output signal 13 is generated by the controller to turn on a courtesy light in the car, if any door is opened. The light further remains on for 12 seconds once all the doors are closed again. However, the courtesy light is turned off if the ignition is switched on.

The controller operates in a cycle. Thus, every 40mS the controller 1 monitors the input signals 3 and characterises the ouput signal 13 depending upon the combination of input signals and depending upon a duration of time.

At the start of every cycle the five current input bits 5 and timer bits 16, which were set in the previous cycle, are clocked into the RAM 2. The 40mS delay allows any switch bounce affecting the input signals 3 to settle down within the 40mS.

The output bit 8 for the courtesy light is then clocked into the output shift register 10 and then into the latch 12 which sends and output signal 13 to turn on or off the courtesy light. The timer circuit operates to set or clear a timer bit 16.

The programmed instructions 21 next take over control of the controller 1. The first part of the program, from line numbers 1 to 15, defines the addresses in the RAM for the input bits 5, output bit 8 and timer bit 16. The instructions at line numbers 16 to 18 initialize the controller 1 after a power-on reset.

The input bits 5 from the door are next examined in turn, from line numbers 19 to 22, and if any input bit 5 indicates that a door is open the program counter jumps to line number 24, which sets the output bit 8 to turn on the courtesy light in the next cycle.

The timer is then started or set, at line number 25, by sending an eight bit word 30, equivalent to 3 cycles of the divider 27, to the adder 19 together with the current eight bit word 28, which is selected from the divider 27. The result is stored in the first eight bits of the second RAM 15, in this case at address one (line number 11). Whenever a door is open the timer is therefore always set in that cycle.

If no door is found to be open the program counter jumps to the same point in the program that occurs next if any door is found to be open, at line number 26, skipping the instruction to set the timer. At this point the timer is tested to see if the stored timer information 14 equals the present eight bit word 28 from the divider 27 by testing the timer bit 16. A match would occur in this case after 300 cycles, or 12 seconds from the cycle in which the timer was set. If a match occurs the output bit 8 is cleared, at line number 27, to turn off the courtesy light in the next cycle, and the timer channel is inhibited, at line number 28, by clearing the 10th bit of the timer information 14. If a match does not occur the program counter jumps to a point in the program that occurs next if a match does occur, at line number 30.

At line number 30 the input bit 5 relating to the ignition is tested so that if the ignition is 'on', the output bit 8 is cleared to turn off the light, and the timer channel is again inhibited, at line number 32, and the program finishes. If the ignition is 'off' the program counter jumps to the end of the program, at line number 34. The program counter enters an infinite loop until the end of the 40mS cycle. The process is then repeated.

The cyclic mode of operation has the additional advantage that it excludes the requirement for extra watchdog hardware or software, to ensure that the controller is operating correctly.

By means of the present invention a convenient logic controller is provided for processing single bits of information, such as is provided by switches and sensors from various devices.

It should be appreciated that the logic controller is designed so that expansion may be easily carried out. There is also space in the RAM for remembering previous events.

## Claims

1. A logic controller comprising, random access storage means for storing single binary bits of information,. programmable read only storage means, an instruction decoder and a timer circuit for measuring a duration of time, the arrangement being such that binary bits of information corresponding to a current "condition" of a number of accessories and to a number of timer "channels", are supplied in a cycle to the random access storage means, the bits being examined by the instruction decoder, in relation to a read only storage means program, to provide output bits of information to control the accessories.

2. A logic controller as claimed in claim 1, in which a shift register is used to write single bits of information to the random access storage means.

3. A logic controller as claimed in claim 1 or 2, in which a shift register is used to read single bits of information from the random access storage means.

4. A logic controller as claimed in any preceding claim, in which a counter is used to clock the single bits of information into and out of the random access storage means.

5. A logic controller as claimed in any preceding claim, in which the timer circuit comprises, a counter, an adder, random access storage means and digital comparison means, the arrangement being such that in one cycle of the counter a duration of time in the form of a binary word is added to the present binary state of the counter, using the adder, the result of the addition being stored in the random access storage means, so that in the next cycle the result in the random access storage means is compared with the next binary state of the counter, using the digital comparison means.

6. A logic controller as claimed in claim 5, in which the cycle is repeated until the result of the addition is found to be equal to the binary state of the counter.

FIG.1 .

FIG.2 .

```
* Courtesy light code example

000                     org  $0
000        door1        equ  $e7              defining   ram addresses
000        door2        equ  $e8
000        door3        equ  $e9
000        door4        equ  $ea
000        ign          equ  $eb
000        light        equ  $07

000        tim1         tmn  $01              tim1 is timer no. 1

* The top bit of ram is only clear after a power-on-reset.
* The first 3 instructions are to cope with a POR.

000 c4ff                bis  no_rst     $ff   branch if not POR
002 b2e7                1dd  $02        $e7   size input registers
004 b107                1dd  $01        $07   size output shift register
006 08e7 no_rst         bis  open       door1
008 06e8                bis  open       door2
00a 12e9                bis  open       door3
00c 12ea                bis  open       door4
00e 2014                jmp  n_open
000 1007 open           set  light            switch on
012 4103                bts  tim1       £3    begin timer
014 f2fd n_open         bic  no_tim     tim1.f  branch if not timed out
016 0007                clr  light            switch off if timed out
018 61                  hlt  tim1             stop timer

019 13eb no_tim         bic  no_ign     ign   branch if no ignition
01b 0007                clr  light            light off & stop timer
01d 61                  hlt  tim1

01e 201e no_ign         jmp  no_ign           end of code: infinite loop
```

## FIG.3.